(19) Europäisches Patentamt
European Patent Office
Office européen des brevets

(11) **EP 3 333 770 A1**

(12) **EUROPEAN PATENT APPLICATION**

(43) Date of publication:
**13.06.2018 Bulletin 2018/24**

(51) Int Cl.:
**G06K 9/68** (2006.01)   **G06F 17/30** (2006.01)
**G06K 9/62** (2006.01)

(21) Application number: **16203304.7**

(22) Date of filing: **09.12.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **FUJITSU LIMITED
Kawasaki-shi Kanagawa 211-8588 (JP)**

(72) Inventor: **Hu, Bo
Winchester, Hampshire SO23 7DT (GB)**

(74) Representative: **Fenlon, Christine Lesley
Haseltine Lake LLP
Lincoln House, 5th Floor
300 High Holborn
London WC1V 7JH (GB)**

(54) **MATCHING GRAPH ENTITIES IN GRAPH DATA**

(57)    A method comprises carrying out a graph entity matching process between first and second graphs in which a first image representing the first graph, and a second image representing an arrangement of graph entities of the second graph, are obtained, a measure of similarity between the first and second images is computed, and a determination is made as to whether a first predetermined condition has been met. When the first predetermined condition has not been met, the graph entity matching process is repeated to compute a similarity measure for a different graph entity arrangement in respect of the second graph. The graph entity arrangement of the second graph which, on the basis of the computed similarity measure(s), provides the closest similarity between the first and second image data is identified as the closest match to the first graph.

FIGURE 5A

**Description**

The present invention lies in the field of data analysis, and in particular relates to matching graph entities in graph data.

A graph is a tuple <V, E> where V is a finite set of entities (for example represented by vertices, and potentially accompanied by vertex labels) and E is a finite set of relations between the entities $(a,b) \in V \times V$ (for example represented by edges and potentially accompanied by edge labels). Edges can be either directed (pointing from the first vertex $a$ to the second vertex $b$) or undirected. Graphs arise naturally in many circumstances, ranging from virtual ones such as the World Wide Web where web pages are effectively graph vertices while hyperlinks can be considered as graph edges, to physical ones such as city maps where roads are graph edges and properties/destinations are graph vertices.

For uniformity, in a model graph edges can be either directed or undirected (normally not mixed), where the graph is referred to as a directed graph or an undirected graph. Among real-life examples, computer and road networks (when one is not modelling traffic of road users) can be bi-directional or undirected, while a social network is likely to be directed (i.e. where A knows B does not give reciprocal effects).

Graph matching is a fundamental graph analysis technique that serves as the foundation of many applications such as ontology mapping/schema matching (where two knowledge models are aligned), social network analysis (where individuals are aligned to offer better insight into their social activities), and healthcare (where clinical pathways are effectively directed acyclic graphs).

Graph matching finds the best alignment of vertices from two different graphs. Graph matching takes two graphs as input and generates a list of vertex pairs where the first vertex comes from the first graph and the second vertex comes from the second graph. Sometimes, the vertex pairs are associated with a real number between 0 and 1 to indicate the confidence of the alignment.

However, graph matching is computationally intensive. Thus far, typical graph matching algorithms involve:

1. Iterating through all the vertices in both a first and a second graph;
2. Computing a similarity value for each pair of candidate vertices;
3. For one vertex from the first graph, ranking its similarity against every vertex from the second graph;
4. Deciding whether the top ranking one (ones) is (are) the best matching vertices.

Although filtering and domain heuristics can be used to improve performance, the current approach typically has a high run-time cost. It is usually necessary to consider graph structure, making it difficult to run parts of the process in parallel. In addition, matching is normally based on labels assigned to the vertices and edges, which can give rise to errors if there is linguistic variance or if these labels are mis-assigned.

By comparing matched graphs it is possible to identify similar and/or dissimilar graph patterns in graphs, for example graphs representing activity in complex networks.

It is therefore desirable to provide a graph matching method which overcomes at least one of the afore-mentioned disadvantages of the current approach.

According to an embodiment of a first aspect of the present invention there is provided a computer-implemented method comprising:

carrying out a graph entity matching process between first and second portions of graph data, the process comprising:

obtaining first image data representing the first portion of graph data;
obtaining second image data for an arrangement of graph entities of a second portion of graph data;
computing a measure of similarity between the second image data and the first image data; and
determining if a first predetermined condition has been met;

when the first predetermined condition has not been met, repeating the graph entity matching process to compute a similarity measure for a different graph entity arrangement in respect of the second portion of graph data; and
identifying as the closest match to the first portion of graph data the graph entity arrangement of the second portion of graph data which, on the basis of the computed similarity measure(s), provides the closest similarity between the first image data and the second image data.

The method allows a list of tuples to be issued which comprises a graph entity from the first portion of graph data and the corresponding graph entity from the second portion of graph data and a confidence value where the overall image similarity may serve as the confidence value. The first and second portions of graph data may be integrated at the best matching entities, allowing integration of domain knowledge represented in the first and second portions of graph data

In an embodiment of the present invention, given the set of vertices of one graph, the best arrangement of vertices of another graph is determined. Given two graphs, the system randomly generates an adjacency matrix of the first graph, and then generates a plurality of adjacency matrices of the second graph with different vertex arrangements. The adjacency matrices corresponding to the graphs are transformed into images, and pairs of images, consisting of a first image corresponding to the first graph and an image selected from the set of images corresponding to the second graph, are forward propagated in a trained artificial neural network to obtain low dimension vectors encoding the high dimensional image feature vectors. The similarity of the vectors is computed, thereby determining the similarity of the corresponding images and, in turn, of the underlying graphs. The vertex arrangement of the second graph whose image presents the greatest similarity with the first graph is considered the best vertex arrangement candidate. The sequences of vertices of the first and second graphs are considered the best alignment, which is subject to investigation by human reviewers.

The graph matching process employed in an embodiment of the present invention may facilitate a fast and highly parallelised approach to discovering best vertex alignment of graphs and hence detection of similar patterns. Since the graph matching process method relies predominantly on graph structural features rather than labels, it may be possible to avoid the matching being subject to linguistic variance due to the labels. In addition, retrieval and investigation of other alignments in addition to the closest match may be easier.

An embodiment of the present invention has many applications. It may, for example, be applied to identify similar graph patterns in large graphs such as a telecommunications network, phone calling networks, etc. It may also be applied, for example, to detect potential fraud by revealing underlying topologic patterns that characterise the identity of network entities.

In particular (but by way of example only), it may be possible to model telephone or email communication networks, for example in trading networks, as graphs, and to compare the graphs to detect patterns of communication activity which are similar to each other or to a pattern of interest, or to detect abnormal activity dissimilar to a normal pattern. By matching such graphs with known patterns, a graph similarity system can detect and identify high risk graph components (e.g. misconduct in system usage, suspicious trading transactions). Such high risk subgraphs can then be flagged and sent to end users of the system (e.g. system administration, and auditing personnel) for further investigation.

Optionally, when the computed similarity measure of the graph entity arrangement of the second portion of graph data which has been identified as the closest match meets a second predetermined condition, the method further comprises issuing an alert signal.

In a method embodying the present invention, the first predetermined condition may be that the number of times the graph entity matching process has been carried out is equal to a preset maximum number. Alternatively, the first predetermined condition may be that a similarity measure has been computed for all possible different graph entity arrangements in respect of the second portion of graph data. Alternatively, the first predetermined condition may be that the computed similarity measure meets or exceeds a first preset similarity threshold.

The second predetermined condition may be that the computed similarity measure meets or exceeds a second preset similarity threshold. The first preset similarity threshold may be equal to the second preset similarity threshold. The second predetermined condition may be that the computed similarity measure is less than a third preset similarity threshold. The first preset similarity threshold may be equal to the third preset similarity threshold.

In a method embodying the present invention, obtaining second image data may comprise extracting information from the graph entity arrangement of the second portion of graph data, and converting the extracted information to a position and pixel value pairing, the second image data being at least one two-dimensional array of pixel values. Obtaining first image data may comprise extracting information from the first portion of graph data, and converting the extracted information to a position and pixel value pairing, the first image data being at least one two-dimensional array of pixel values. Converting the extracted information to a position and pixel value pairing may comprise ranking each graph entity in the portion of graph data according to the number of graph entities directly neighbouring that graph entity, and assigning a position to each graph entity in accordance with its ranking, in which case the method may further comprise grouping position and pixel value pairings having adjacent positions into a plurality of regions, such that the first image data and the second image data comprise respective pluralities of two-dimensional arrays of pixel values. In such an embodiment, the first predetermined condition may comprise two sub-conditions, the first sub-condition being that a similarity measure has been computed for all possible different graph entity arrangements within a given region, and the second sub-condition being that the first sub-condition is met and similarity measures have been computed for all regions.

In a method embodying the present invention, computing a similarity measure may comprise inputting the first and second image data into an artificial neural network, and obtaining a value representing the similarity between feature vectors extracted respectively from the first and second image data by the artificial neural network.

According to an embodiment of a second aspect of the present invention there is provided apparatus comprising:

a graph entity matcher to carry out a graph entity matching process between first and second portions of graph data, the process comprising:

obtaining first image data representing the first portion of graph data;
obtaining second image data for an arrangement of graph entities of a second portion of graph data;
computing a measure of similarity between the second image data and the first image data; and
determining if a first predetermined condition has been met;

when the first predetermined condition has not been met, the graph entity matcher repeats the graph entity matching process to compute a similarity measure for a different graph entity arrangement in respect of the second portion of graph data; and
a graph matcher to identify as the closest match to the first portion of graph data the graph entity arrangement of the second portion of graph data which, on the basis of the computed similarity measure(s), provides the closest similarity between the first image data and the second image data.

Apparatus embodying the present invention may further comprise an alert generator to generate an alert signal when the computed similarity measure of the graph entity arrangement of the second portion of graph data which has been identified as the closest match meets a second predetermined condition.

Embodiments may include software, such as a computer program, which when executed by a computing apparatus, causes the computing apparatus to perform a method embodying the present invention. Such a computing apparatus may be a computing device, such as a server or other computer, or may be a network of interconnected computing devices operating in collaboration with one another. The software or computer program may be stored on a computer readable medium. The computer readable medium may be a non-transitory computer-readable medium.

A detailed description of embodiments will now be provided with reference to the accompanying drawings, in which:

Figure 1 is a schematic diagram illustrating the flow of processing in an embodiment;
Figure 2A illustrates a visualisation of a portion of directed graph data;
Figure 2B illustrates an exemplary encoding of the graph data of Figure 2A;
Figure 2C illustrates an alternative exemplary encoding of the graph data of Figure 2A;
Figure 3 illustrates an apparatus of an embodiment;
Figure 4 illustrates an exemplary system architecture underlying an apparatus of an embodiment;
Figure 5A illustrates a method of an embodiment;
Figure 5B illustrates another method of an embodiment;
Figure 6 illustrates a parallelised processing of a method of an embodiment;
Figure 7 illustrates a system of an embodiment; and
Figure 8 illustrates an example of a convolutional neural network model.

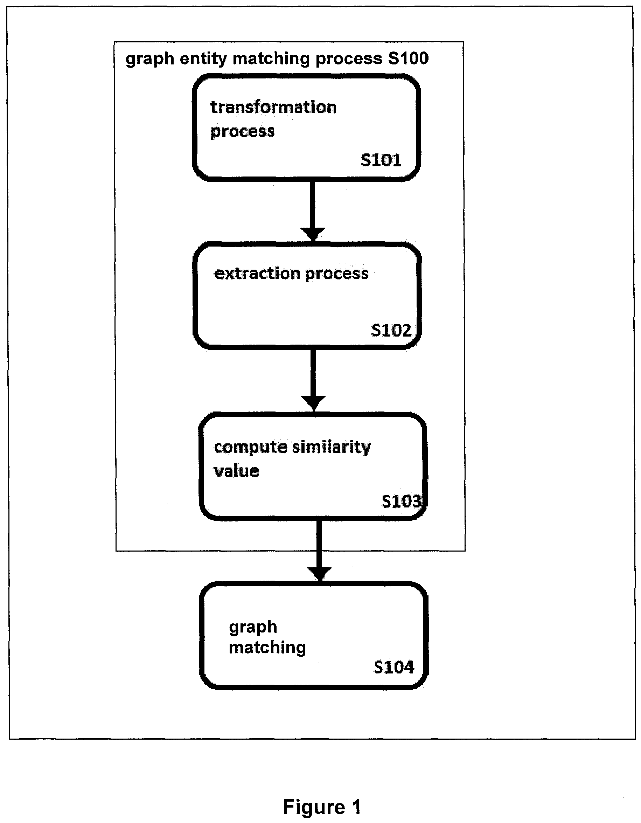

Figure 1 is a schematic diagram illustrating the flow of processing in a method embodying the invention.

Step S100 of the method comprises carrying out a graph entity matching process between first and second portions of graph data. The graph entity process of step S100 is iterative and comprises repeatedly carrying out a transforming step S101 in which the first portion of graph data and an arrangement of graph entities of the second portion of graph data are transformed to image data, a feature extraction step S102 in which features are extracted from the first image data and the second image data, and a similarity computation step S103 in which the extracted features are compared to compute a similarity measure for the similarity between the features, and hence between the first and second image data, and hence between the first portion of graph data and the arrangement of entities of the second graph portion of graph data. The graph entity matching step S100 is repeated to compute a similarity measure for different graph entity arrangements in respect of the second portion of graph data until a first predetermined condition is met. The first predetermined condition may be, for example, that the number of times the graph entity matching process has been carried out is equal to a preset maximum number, that a similarity measure has been computed for all possible different graph entity arrangements in respect of the second portion of graph data, or that the computed similarity measure meets or exceeds a preset similarity threshold.

When the first predetermined condition has been met, in step S104 a graph matching process is carried out in which the computed similarity measures are used to identify as the closest match to the first portion of graph data the graph entity arrangement of the second portion of graph data which provides the closest similarity between the first image data and the second image data.

The output of the graph matching process may be a list of pairs with one element of the pair being a vertex from the first portion of graph data and the other element of the pair being a vertex from the second portion of graph data. In the present application, embodiments of the invention are explained where matching is carried out on graphs with the same number of vertices and matching is assumed to be 1-to-1, where for a vertex from the first portion of graph data, one and only one vertex from the second portion of graph data is chosen and returned as the best answer. Less optimal matches (those which are considered inferior compared with the optimal answer) may be discarded.

In the transformation step S101 first image data representing the first portion of graph data is obtained, and second image data for an arrangement of graph entities of a second portion of graph data is also obtained. In the present embodiment, obtaining first image data comprises extracting information from the first graph data, and converting the extracted information to a position and pixel value pairing, the first image data being a two-dimensional array of pixel values. Similarly, deriving second image data comprises extracting information from the graph entity arrangement of the second graph data, and converting the extracted information to a position and pixel value pairing, the second image data being a two-dimensional array of pixel values.

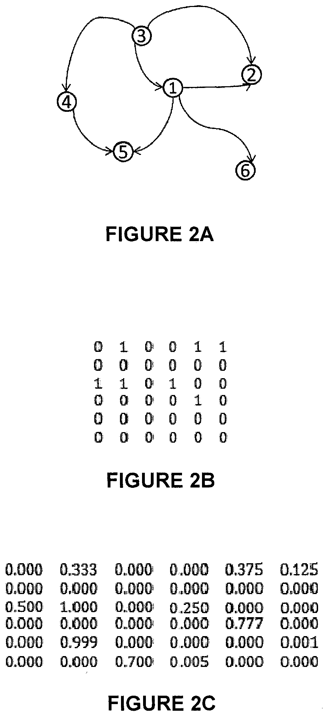

Figure 2A illustrates a visualisation of directed graph data, with Figure 2B illustrating an exemplary encoding of the graph in the form of an adjacency matrix. Some information present in the graph data, such as vertex labels, is lost in the image representation, so that the image may be considered to be extracted from, or a distillation of, the graph data. The adjacency matrix includes a row and column for each vertex. Each edge is represented by a "1" at the matrix entry at the row of the source vertex and the column of the destination vertex. Alternatively, the cell values of the adjacency matrix can be decimal numbers between 0 and 1 to signify the strength of edges, e.g. how close the two vertices connected by the edge are, such as shown in Figure 2C for example. In Figure 2C a non-zero value signifies the existence of an edge with the value ("edge weight") indicating difference semantics as defined by the users/modellers. Typical semantics of weighted edges are social bindings, traffic/road usage, time/length of travelling from one point to another, etc. Edge weights are often normalised to real numbers between 0 and 1 for better comparison. In bidirectional graphs edge weights can be asymmetric, i.e. differ between the directions.

The adjacency matrix can be converted to image data by converting the adjacency matrix entries to pixel values, with the positions being maintained (that is, the adjacency matrix entry at position (i, j) is converted to the pixel value for the pixel at (i, j)). The conversion is dependent upon the range of pixel values allowed in the image data being generated. For example, it may be that each pixel can be either black or white, so that the "0" and "1" values need not be altered. Alternatively, it may be that the edges are weighted and the matrix entries represent the edge weights and can be one of a range of values. That range of values may then be up-scaled or down-scaled to conform to the range of pixel values of the image data.

In examples in which there is a single pixel value per matrix entry, the image is a monochrome image, and the pixel value corresponds to the intensity of the monochrome at that pixel. For example, the image may be grayscale, with the range of possible pixel values from minimum value (e.g. 0) to maximum value (e.g. 255) corresponding to white to black.

The image data may be stored as raw image data, as bitmaps, or as compressed image files such as jpeg or png. The stored images may replace the respective portions of graph data in storage, or may be stored in association with the respective portions of graph data.

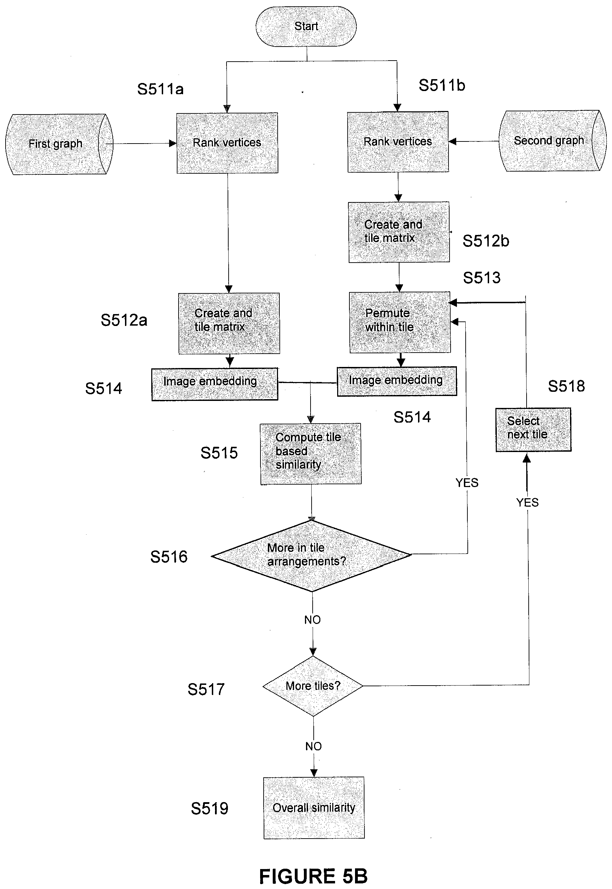

In one embodiment explained later with reference to Figure 5B, in step S101 converting the extracted information to a position and pixel value pairing comprises ranking each graph entity in the portion of graph data according to the number of graph entities directly neighbouring that graph entity, and assigning a position to each graph entity in accordance with its ranking. Position and pixel value pairings having adjacent positions are then grouped into a plurality of regions, such that the first image data and the second image data comprise respective pluralities of two-dimensional arrays of pixel values. In this case the first predetermined condition comprises two sub-conditions, the first sub-condition being that a similarity measure has been computed for all possible different graph entity arrangements within a given region, and the second sub-condition being that the first sub-condition is met and similarity measures have been computed for all regions.

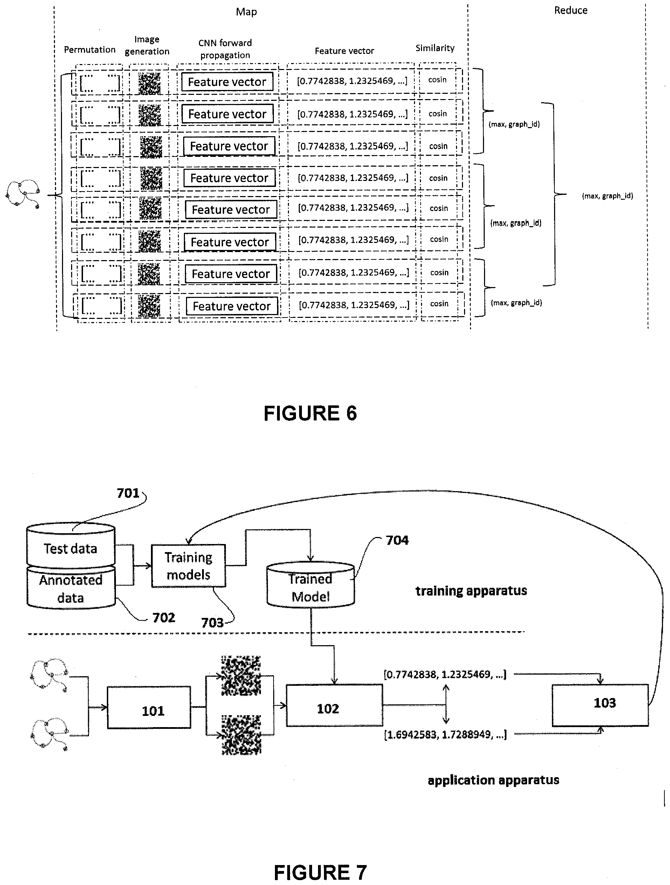

In the feature extraction step S102 features are extracted from the first image data and the second image data. In the similarity computation step S103 the extracted features are compared to compute a similarity measure for the similarity between the features. As explained in more detail later with reference to Figure 7, in an embodiment of the present invention features may be extracted from the image data and compared using an artificial neural network, in particular a pretrained convolutional neural network (CNN). The trained and optimised CNN is utilised for graph entity matching computation, and extracts feature vectors from the images which are then compared to provide a similarity measure.

Optionally (not shown in Figure 1) the method of the embodiment may further comprise a further step of issuing an alert when the computed similarity measure of the graph entity arrangement of the second portion of graph data which has been identified as the closest match meets a second predetermined condition. The second predetermined condition may be that the computed similarity measure meets or exceeds a preset similarity threshold, which might be indicative for example of a close similarity between activity of interest represented by the first portion of graph data and activity represented by the second portion of graph data. Alternatively, the second predetermined condition may be that the computed similarity measure is less than a preset similarity threshold, which might be indicative for example of a lack of similarity between activity of interest represented by the first portion of graph data and activity represented by the second portion of graph data. The preset similarity threshold of the second predetermined condition may be equal to the preset similarity threshold of the first predetermined condition.

For example, the first and second graph data portions may be representations of messaging or communication systems, such as a telecommunication or computing network, wherein the vertices represent nodes or terminals, and the edges represent messages or data transmitted between the nodes during respective time periods. The edges may be weighted with the weight representing a number of messages or amount of data transmitted. Obtaining a similarity value enables activity in different networks to be compared, or activity in the same network during different time periods to be compared, in a computationally efficient manner. Such comparisons may be useful for pattern matching and/or identifying faults or suspect network activity. For example, a data graph representing a time period may be compared with the or each data graph representing one or more preceding time periods, a computed similarity value below a predefined threshold (or a computed similarity value of "no" or otherwise representing dissimilarity) for a predefined proportion or more of the one or more preceding time periods may raise an alert (for example, to a user terminal or other output destination) that unusual or abnormal activity (such as a fault or surge) took place in the time period in question.

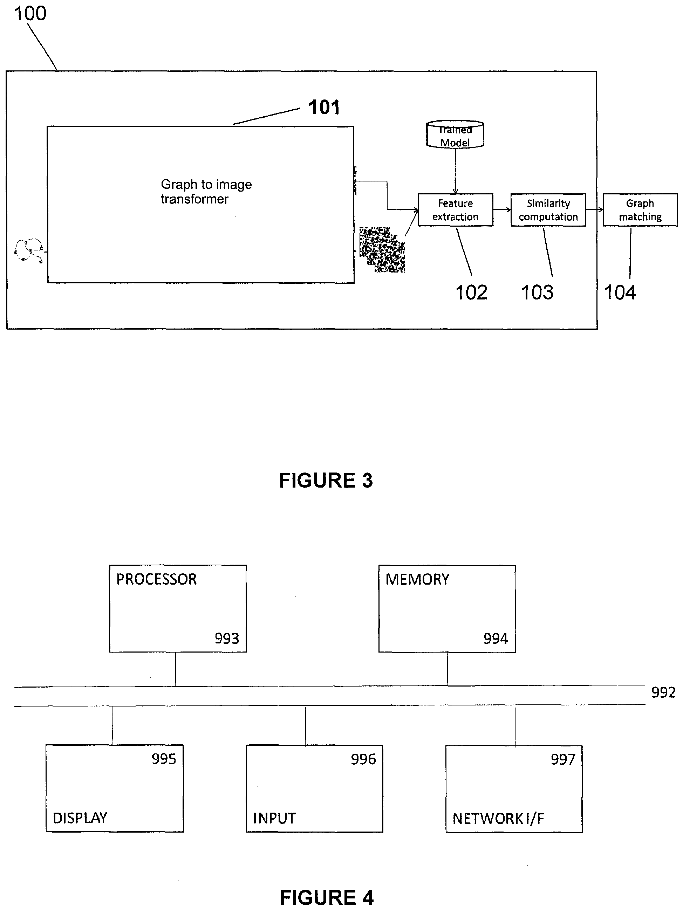

Figure 3 shows apparatus according to an embodiment. As shown in Figure 3, in this embodiment the apparatus comprises a graph entity matcher 100 and a graph matcher 104. The graph entity matcher comprises a graph to image transformer 101, a feature extractor 102 and a similarity measure generator 103.

The graph to image transformer 101 is configured to receive or obtain, as inputs, a first portion of graph data and a second portion of graph data (as represented by the arrow directed into the graph to image transformer). The graph to image transformer 101 is configured to perform the transformation process of step S101 of Figure 1, or a transformation process as described elsewhere in this document, and thereby to generate a first image, manifest as first image data, and a second image, manifest as second image data. The outgoing arrow from the graph to image transformer 101 in Figure 3 represents the transfer of the first and second image data to the feature extractor 102.

The feature extractor 102 is configured to receive or obtain, as inputs, the first image data and the second image data. The feature extractor 102 is configured to perform the extraction process of step S102 of Figure 1, or an extraction process as described elsewhere in this document, and thereby to extract a first feature vector from the first image data and a second feature vector from the second image data. For example, the feature extractor 102 may be configured to apply an image convolutional neural network to the image data to extract the respective feature vector. The outgoing arrow from the feature extractor 102 represents the transfer of the first and second feature vectors from the feature extractor 102 to the similarity measure generator 103.

The similarity measure generator 103 is configured to receive or obtain, as inputs, the first feature vector and the second feature vector. The similarity measure generator 103 is configured to perform the computing a similarity value of step S103, or a procedure for computing a similarity value from two feature vectors described elsewhere in this document, and thereby to compute a similarity value representing the similarity between the first feature vector and the second feature vector. For example, the similarity measure generator 103 may perform a cosine distance comparison. The similarity measure generator 103 is configured to transfer the computed similarity value to the graph matcher 104.

The graph matcher 104 is configured to obtain or receive the computed similarity value from the graph entity matcher 100, and to output the similarity value to an output destination. The graph matcher 104 is configured to perform the graph matching step at S104 of Figure 1. The graph matcher 104 may also be configured to perform the above-described optional step of issuing an alert, and in this case may either issue the alert itself or output an alert signal to a separate alert generator (not shown). The output of the graph matcher 104 may be a specified storage location. Alternatively, the output location may be an apparatus or entity providing the portions of graph data to the graph entity matcher 100.

Figure 4 illustrates an exemplary system architecture underlying an apparatus of an embodiment, implementing a computer-implemented method of an embodiment, or executing a program or software of an embodiment.

The system architecture of Figure 4 is a computing device, such as a data storage server, database controller, or server. It may be that the system architecture comprises a number of such computing devices operating cooperatively. The computing device comprises a processor 993, and memory, 994. Optionally, the computing device also includes a network interface 997 for communication with other computing devices, for example with other computing devices of invention embodiments.

For example, an embodiment may be composed of a network of such computing devices. Optionally, the computing device also includes one or more input mechanisms such as keyboard and mouse 996, and a display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations, for example, the computer-implemented method of an embodiment (such as that of Figure 1), or to operate as a functional apparatus of an embodiment (such as that of Figure 3). Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing code stored in the memory to implement the computer-implemented method of an embodiment (for example, as illustrated in Figure 2) or to implement the various different functions of the trainer or training processor, the graph to image transformer 101, the feature extractor 102, the similarity measure generator 103 and the graph matcher 104, described here and in the claims. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 997 may display a representation of data stored by the computing device and may also display a cursor and dialog boxes and screens enabling interaction between a user and the programs and data stored on the computing device.

The input mechanisms 996 may enable a user to input data and instructions to the computing device.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

The graph to image transformer 101 of Figure 3 may be a processor 993 (or plurality thereof) executing processing instructions (a program) stored on a memory 994 and exchanging data via a network I/F 997. In particular, the processor 993 executes processing instructions to receive, via the network I/F, or via an internal bus within the apparatus, the first and second portions of graph data from an entity requiring a similarity comparison of the graph data, which entity may be external to the computing device or may be a program running on the same computing device, and transform the first and second portions of graph data into first and second images, as in step S101 of Figure 1. Furthermore, the processor 993 may execute processing instructions to store the images (or data encoding them) on a connected storage unit and/or to transmit, via the network I/F 997 or via an internal bus, data encoding the first image and data encoding the second image, to the feature extractor.

The feature extractor 102 of Figure 3 may be a processor 993 (or plurality thereof) executing processing instructions (a program) stored on a memory 994 and exchanging data via a network I/F 997. In particular, the processor 993 executes processing instructions to receive, via the network I/F, or via an internal bus within the apparatus, the first and second images from the graph to image transformer 102, and extract from the first and second images the first feature vector and the second feature vector, respectively, as in step S102 of Figure 1. Furthermore, the processor 993 may execute processing instructions to store the feature vectors (or data encoding them) on a connected storage unit and/or to transmit, via the network I/F 997 or via an internal bus, the first and second feature vectors to the similarity measure generator 103.

Although not illustrated in Figures 1 & 3, the computer-implemented method of an embodiment may include a training process, and an apparatus of an embodiment may include a training processor, configured to execute the training process. The training process is described elsewhere, and is a process for training (i.e. setting values of configurable parameters in) an image classification neural network model, which model is provided to the feature extractor 102, and is executed or applied to the first and second images at the feature extractor 102 in carrying out step S102. The training processor may be a processor 993 (or plurality thereof) executing processing instructions (a program) stored on a memory 994 and exchanging data via a network I/F 997. In particular, the processor 993 executes processing instructions to receive or obtain, via the network I/F, or via an internal bus within the apparatus, a training set of image pairs, and for image pair from among the training set of image pairs, obtaining a corresponding target similarity value, and training the image classification neural network model using the training set of image pairs and target similarity values. Furthermore, the processor 993 may execute processing instructions to store the trained image classification neural network model on a connected storage unit and/or to transmit, via the network I/F 997 or via an internal bus, trained image classification neural network model to the feature extractor 102.

The similarity measure generator 103 of Figure 3 may be a processor 993 (or plurality thereof) executing processing instructions (a program) stored on a memory 994 and exchanging data via a network I/F 997. In particular, the processor 993 executes processing instructions to receive, via the network I/F, or via an internal bus within the apparatus, the first and second feature vectors from the feature extractor 102, and compute a similarity value representing the similarity between the two feature vectors, as in step S103 of Figure 1. Furthermore, the processor 993 may execute processing instructions to store the computed similarity value on a connected storage unit and/or to transmit, via the network I/F 997 or via an internal bus, the computed similarity value to the graph matcher 104.

The graph matcher 104 of Figure 3 may be a processor 993 (or plurality thereof) executing processing instructions (a program) stored on a memory 994 and exchanging data via a network I/F 997. In particular, the processor 993 executes processing instructions to receive, via the network I/F, or via an internal bus within the apparatus, the computed similarity value from the similarity measure generator 103, and output the computed similarity value, as in step S104 of Figure 1.

Methods embodying the present invention may be carried out on a computing device such as that illustrated in Figure 4. Such a computing device need not have every component illustrated in Figure 4, and may be composed of a subset of those components. A method embodying the present invention may be carried out by a single computing device in communication with one or more data storage servers via a network. The computing device may be a data storage itself storing the image classification convolutional neural network.

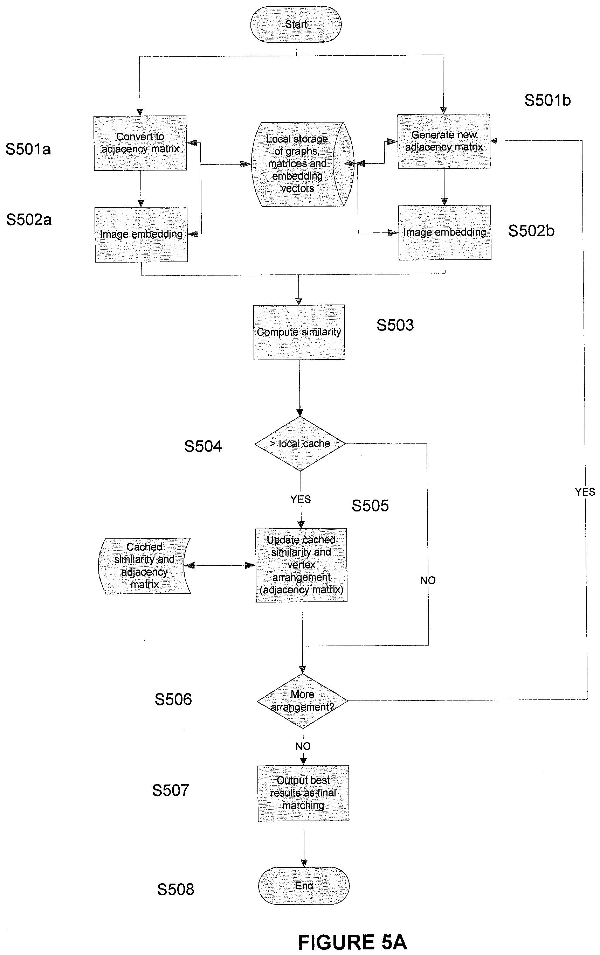

Figures 5A and 5B illustrate methods embodying the invention, the methods performed by a system, wherein the system may be, for example, an apparatus such as that illustrated in Figure 3, implemented by the hardware of Figure 4.

In step S501a the first portion of graph data is converted to a first adjacency matrix, at step 502a the first adjacency matrix is then transformed into first image data, and input to a trained CNN model.

In step S501 b a new vertex arrangement of the second portion of graph data is generated and in this arrangement the second portion of graph data is converted to a second adjacency matrix. At step S502b the second adjacency matrix is then transformed into second image data and input to the trained model.

At step S503 the first and second image data are forward propagated through the CNN and a similarity measure of the degree of similarity between the first and second image data, i.e. between the first portion of graph data and the second portion of graph data based on the given vertex arrangement, is computed.

In step S504 the computed similarity measure is compared with a similarity measure stored in a local cache. If greater than the stored similarity measure, in step S505 the local cache is updated with the computed similarity measure and the corresponding adjacency matrix/vertex arrangement of the second portion of graph data.

In step S506 a check is made as to whether there are any vertex arrangements of the second adjacency matrix for which a similarity measure has not yet been computed. If that is the case the process returns to step S501 b to generate and process a new (different) vertex arrangement of the second adjacency matrix.

Steps S501 b to S506 are repeated until it is decided at step S506 that the process should be ended, for example because a similarity measure has been computed for all the different vertex arrangements of the second adjacency matrix, or:

    a. A predefined iteration threshold is reached, or
    b. A predefined similarity threshold is reached (for instance the computed similarity value is 0.95, and this is greater than 0.90 which is the similarity threshold).

At step S507 the vertex arrangement for which the highest similarity value was calculated is selected for output, and the row/column of the first adjacency matrix is mapped against the row/column of the second adjacency matrix of the selected vertex arrangement. This one to one row or column mapping is output as the most suitable graph vertex matching results.

For instance, given two graphs where the first graph contains vertices $v_1, v_2, v_3, \ldots v_n$ and the second graph contains vertices $v_a, v_b, v_c, \ldots v_x$, images of the following arrangement of adjacency matrices produce the greatest similarity value,

| $\backslash$ | $v_1$ | $v_2$ | $v_3$ | .... | $v_n$ |
|---|---|---|---|---|---|
| $v_1$ | .... | .... | .... | .... | .... |
| $v_2$ | .... | .... | .... | .... | .... |
| $v_3$ | .... | .... | .... | .... | .... |
| .... | .... | .... | .... | .... | .... |
| $v_n$ | .... | .... | .... | .... | .... |

$$
\begin{array}{c|ccccc}
\backslash & v_a & v_c & v_b & .... & v_x \\
\hline
v_a & ... & ... & ... & ... & ... \\
v_c & ... & ... & ... & ... & ... \\
v_b & ... & ... & ... & ... & ... \\
... & ... & ... & ... & ... & ... \\
v_x & ... & ... & ... & ... & ... \\
\end{array}
$$

It suggests that the following mappings are the best candidates:

$$(v_1, v_a), (v_2, v_c), (v_3, v_b), ..., (v_n, v_x)$$

The method ends at step S508.

The naive approach is full permutation: given $G_1$ and $G_2$ as two input graphs, $G_1$ will be fixed as reference while a full vertex permutation will be carried out on $G_2$. With each permutation $G_2^i$, grayscale image is generated and then image similarity $\Delta\left(G_2^i, G_1\right)$ is computed using the train CNN image model. The one that gives the greatest similarity is then considered the best alignment among vertices from $G_1$ and $G_2$. By doing this, the system not only computes graph similarity, but also suggests matching or alignment of the two input graphs.

However, full permutation presents an overall complexity of $O(n!)$ which is usually too expensive for large graphs. In order to reduce computation requirements, at the initial stage it may be assumed that an inexact answer is acceptable (due to resource scarcity or time constraints). In this case:

1. Firstly, the system will check (or prompt users to check) whether a seed set of initial vertex alignments is available for use as an anchor alignment set of vertices. If such an anchor alignment set of vertices is available, the method iteratively uses a window/tile of the matrix, i.e. a range of vertices before and after the anchor vertices, as the starting point to detect other potential alignments within the window/tile, instead of full matrix alignment. In particular, for the first adjacency matrix of the first portion of graph data, a fixed region ($m$ vertices, where m can be initialised as a preset number, e.g. 5, or predefined by users) before and after the anchor vertices are chosen to compose the first tile. In the second graph, $2 \times m$ vertices are chosen and concatenated before and after the anchor vertex of the second portion of graph data to become the base composition of the second tile which is then subject to full permutation. Once the best alignment among $2 \times m$ vertices is identified, vertices in the mapped region are considered anchors, and the above process can continue. By doing this, the complexity is reduced from $O(N!)$ to $O(2m!)$, where $m$ is defined as above.

2. If there is no anchor alignment set, vertex-degree based heuristic rules may be applied to carry out permutation only within limited ranges (as discussed below). An initial range is arbitrarily defined and the vertex permutations are performed within each range slice. The range scoping can be carried out incrementally, with the initial range giving an acceptable but not accurate result. By increasing the range, the system will be able to provide better quality answers with increased computational cost.

As multiple images are involved (corresponding to different vertex arrangements), the image-based graph embedding process may be parallelised to increase system performance.

The above process is likely to provide only a local optimum in the search for best vertex alignment, but it should enable further processing of the data to be carried out based on the "current best" solution. When system resources permit, a full permutation may be carried out in a full parallelised fashion, since image conversion and CNN forward propagation can be performed independently without iteration. The diagram shown in Figure 6 depicts such a process, where each of the independent similarity computation processes can be carried out by a separate CPU thread.

Known "map-reduce" computing techniques may also be applied in this case as shown in Figure 6, where the "map" stage computes the similarity between the first graph and an arrangement of the vertices of the second graph, while the "reduce" stage finds first the local maximum and then the global maximum of the similarity measure, the corresponding vertex arrangement of which is judged to be the mapping answer.

As mentioned above, the naïve mapping approach can be optimised based on domain heuristics by using a vertex degree-based approach which is based on the assumption that the final alignment between a vertex from the first portion of graph data and another vertex from the second portion of graph data will have similar vertex degrees, i.e. the numbers of their direct neighbours is likely to be similar. That is, if the similarity is computed from image features, it will mainly align vertices with largely similar degrees. This should also hold for graph similarity, because normally-aligned vertices from different graphs would be expected to have similar degrees. With this assumption, one can order the adjacency matrix of source and target graphs based on their vertex degrees. The matrices are then divided into different slices based on ranges of vertex degree. The vertex arrangement is permutated within each slice, rather than being fully permutated across the entire matrix. The rationale for this is that swapping a high degree vertex from the top of the matrix with a very low one from the bottom of the matrix is not likely to produce good enough similarity anyway. An embodiment using the vertex degree-based approach will now be described with reference to the flowchart of Figure 5B

At step S511 a the vertices of the first portion of graph data are ranked according to their respective degrees, and in step S512a a first adjacency matrix is created, with the vertices in the order of rank, and then divided into tiles/regions of adjacent cells.

Similarly, at step S511 b the vertices of the second portion of graph data are ranked according to their respective degrees, and in step S512b a second adjacency matrix is created, with the vertices in the order of rank, and then divided into tiles/regions of adjacent cells.

At step S513, for one of the tiles of the second adjacency matrix, a first vertex arrangement is selected.

At steps S514a and S514b the first adjacency matrix and the first vertex arrangement of the tile of the second adjacency matrix are respectively transformed into first and second image data and input to the trained model. For better alignment the first image data corresponds to only a slice, i.e. part, of the first adjacency matrix.

At step S515 the first and second image data are forward propagated through the CNN and a similarity measure of the degree of similarity between the first and second image data, i.e. between the first portion of graph data and the second portion of graph data based on the given vertex arrangement, is computed.

In step S516 a check is made as to whether there are any vertex arrangements within the same tile of the second portion of graph data for which a similarity measure has not yet been computed. If that is the case the process returns to step S513 to generate and process a new (different) vertex arrangement of that tile of the second adjacency matrix. If not, the process proceeds to step S517, at which a check is made as to whether there are any other tiles of the second adjacency matrix for which a similarity measure has not yet been computed. If that is the case the process goes to step S518 at which a new tile of the second adjacency matrix is selected and then returns to step S513 to generate and process a new (different) vertex arrangement of that tile of the second adjacency matrix.

If at step S517 it is determined that there are no more tiles of the second adjacency matrix to be processed, then the process proceeds to step S519 at which the overall similarity is determined, that is the vertex arrangement for which the highest similarity value was calculated is selected for output, and the row/column of the first adjacency matrix is mapped against the row/column of the second adjacency matrix of the selected vertex arrangement. This one to one row or column mapping is output as the most suitable graph vertex matching results.

The result of this process is likely to be the local optimum. It is possible that when further system resources become available, other arrangements can be exhaustively examined.

For instance, assume the following adjacency matrix presents a descendent order of vertex degree with degree($v_i$) $\geq$ degree($v_j$) for any $i \leq j$:

|  | $v_1$ | $v_2$ | $v_3$ | .... | $v_n$ |
|---|---|---|---|---|---|
| $v_1$ | ... | ... | ... | ... | ... |
| $v_2$ | ... | ... | ... | ... | ... |
| $v_3$ | ... | ... | ... | ... | ... |
| ... | ... | ... | ... | ... | ... |
| $v_n$ | ... | ... | ... | ... | ... |

When generating vertex permutation, $v_2$ will only be swapped with other vertices with relatively high degrees. It will not, as in the case of full permutation, be swapped to the bottom of the matrix (e.g. $v_n$) which is a position normally occupied by low degree vertices. The exact range that is an admissible range within which a vertex can change its position may be predefined by end users or learnt through execution.

In one exemplary method to define the range of vertex degree and slice up the matrix is that:

    1. The range is initialised as 5% of the total number of vertices.
    2. The range is then gradually increased with 1% of vertices a time while the following cost function

$$\delta = \max(sim_{i+1}) - \max(sim_i)$$

is examined, where $sim_i$ is the graph similarity computed at the ith iteration of expanding the range.

3. The procedure terminates when $\delta \leq \tau$, $\tau$ a sufficient small number, e.g. 0.005.

Alternatively, some "anchor" vertices can be initially identified manually to scope down the search space by decreasing the number of vertices subject to full permutation. Such anchor mapping can be utilised as follows:

Assume the rest non-anchor vertices are still arranged in certain order (e.g. vertex degree), the problem is then reduced to a permutation over a subset of the entire set of vertices.

If v_3 is known to map to v_b, instead of full permutation of v_a to v_x, one only needs to consider a subset before and after v_b separately. In practice, it may be desirable (in order to facilitate image feature extraction by the CNN) to expand the region of consideration with a number of buffer vertices before and after the anchor vertices (as indicated above by the broken lined bracket, where the solid brackets indicate the ideal situation). Nevertheless, this will significantly reduce the overall complexity.

Figure 7 illustrates a system of an embodiment. The particular system of Figure 7 includes a training processor 703, which utilises test data 701 and annotated data 702 to generate a trained model for feature extraction 704 which trained model is accessible by the feature extractor 102 (referred to as a feature computation processor).

The system comprises a hardware architecture such as that illustrated in Figure 4. In particular, a processor performs the processing instructions of the training processor 703, the graph to image transformer 101, the feature extractor 102, and the similarity value computation processor 103. One or more storage units (memories) store the processing instructions, the trained model for feature extraction 704, the first and second portions of graph data, the first and second images, and the first and second feature vectors.

Like reference numerals are assigned to the components that are in common with the components of Figure 3, and hence the discussion of said components is not repeated here. The components in common with Figure 3 101-103 are referred to as "application apparatus" in the context of Figure 7, which also includes a training apparatus 701-704, that is, an apparatus configured to perform a training process.

The training apparatus is under the control of a training processor 703, and is configured to store test data 701, annotated data 702, and a model that is being trained 704.

For example, the model being trained 704 may be an image classification convolutional neural network model. The test data 701 may be a training set of image pairs, and the annotated data 702 may be a target similarity value for each of the set of image pairs in the training set. The target similarity value is a value representing whether the corresponding pair of images can be considered similar, and may be a binary "yes" or "no", or may be a value, for example between 0 and 1, quantifying the similarity. The test data 701 and annotated data 702 may be combined in a single storage, for example, an indexed table, with each row comprising image data of each of a pair of images, and a target similarity value for the pair.

The pairs of images may be stored as raw image files (i.e. pixel value by pixel value) or stored in an image format such as tiff, jpeg, or bitmap. The indexed table may be distributed across multiple computer servers as a distributed data store.

An untrained, or not yet fully trained, image classification convolutional neural network model is stored in the storage unit 704. The training process is a backward error propagation procedure which modifies configurable parameters in the convolutional neural network. For each pair of images and corresponding target similarity value, the training processor 703 is configured to extract a feature vector from each of the pair of images by executing the stored image classification neural network model on the respective images, computing a similarity value representing the similarity between the two feature vectors in accordance with the computing a similarity value of step S103, and, if there is a difference between the computed similarity value and the target similarity value, performing backward error propagation to modify the image classification neural network model to reduce the difference, wherein the extracting, computing, and backward error propagation are performed iteratively until either a predefined maximum number of iterations is reached or the difference falls below a threshold value. Backward error propagation is carried out by observing how the error (difference) changes as a function of one or more configurable parameters, and, by addressing the configurable parameters in turn, finding values for the configurable parameters that minimise the error, wherein the error minimisation is of an aggregate error across all pairs of training images which have been used to train the convolutional neural network so far.

The training processor 703 iterates over all of the pairs of images in the test data 701, trying to find features of the images that maximise the probability of the outcome (the computed similarity value) matching the corresponding target similarity value. Errors are then back propagated to the first layer of the convolutional neural network. Errors (i.e. a difference between the target similarity value for the pair and the computed similarity value for the pair) result in the adjustment of configurable parameters (such as weighting and bias factors) in the convolutional neural network being trained. The feedback loop continues until a predefined maximum number of repetitions is reached or the errors converge to an acceptable range.

An image classification neural network model such as LeNet or AlexNet could be stored as the image classification convolutional neural network model and trained by the training processor 703. As the input image data is normally large in size, convolutional neural network models effectively perform dimension reduction, reducing the input image data to a single vector of feature values per image, representing key features of the image representation of the portion of graph data.

The training can be parallelised by tiling the input images.

Training data can be obtained in the following two ways:

1) Reuse an existing image repository, e.g. MNist data set for digit recognition; or

2) Purposely built, by: generate grayscale raster images; for each image, rotate and randomly edit to produce "new" images that are considered to some extent similar to the original image; and label the original image and the edited image pair with either "T/F" or a target similarity value. For example, the target similarity value may be obtained by quantifying a degree of the editing performed to obtain the new image from the original image in the pair, and representing the degree of editing in the target similarity value. In other words, an edit distance between the two images is calculated, wherein numeric values are assigned to operations that transform the original image into the new image, and the target similarity value is the aggregation of all the operations.

Once the training processing is complete, a trained image classification convolutional neural network model is obtained, which can be applied directly to image data by the application apparatus, specifically by the feature extractor 102. Such direct application can be referred to as forward propagation.

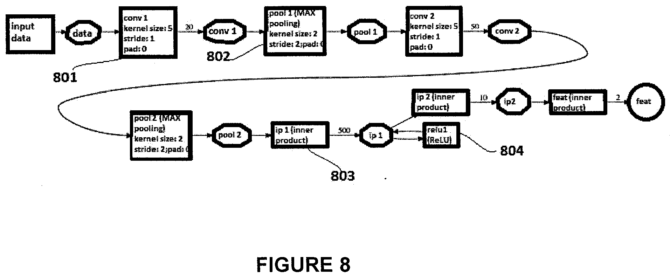

Figure 8 illustrates an example of a convolutional neural network model. At each layer of the model, there are configurable parameters (such as weights and bias factors) to be learned (i.e. configured) using the pairs of training images and target similarity values. The purpose of such parameters is to aggregate input image data through multiple levels of abstraction and projection, so that the final extracted feature vectors of images can maximise the probabilities of computed similarity values that match the target similarity values and minimise the probabilities of computed similarity values that do not match the target similarity values.

The convolutional neural network model is a multilayer neural network architecture comprising one or more convolutional layers 801 (which convolve the input image data using configurable parameters), one or more sub-sampling layers 802 (which pool spatially related values from the convolution layers), and one or more fully connected layers (inner product layers) 803. The convolutional neural network also includes a configurable ReLu layer 804, which is an activation function that configures activation functions of neurons in the network. Inner-product layers are responsible for dimension reduction that condenses the size of features that need to be represented using numeric values. The inner product layers 803 may be configured in accordance with an image size, since the inner product layers are the final layers for dimension reduction, reducing the vectors of size hundreds to a smaller number of features.

Outcome of the training is a neural network model stored in a local storage which can be applied directly in the future. The diagram of Figure 8 is an example of CNN model. At each layer of this model, there are parameters (such as weights and bias factors) to be learned using the input annotated image pairs. The purpose of such parameters is to aggregate input data through multiple levels of abstraction and projection, so the final feature vectors of images can maximise the probabilities of assigned labels and minimise the probabilities of labels not assigned to the images.

Learnt models are then verified using test data (similar to the training data in terms of format and data structure) to fine-tune the learnt parameters.

The above-described embodiments of the present invention may advantageously be used independently of any other of the embodiments or in any feasible combination with one or more others of the embodiments.

**Claims**

1. A computer-implemented method comprising:

carrying out a graph entity matching process between first and second portions of graph data, the process comprising:

obtaining first image data representing the first portion of graph data;
obtaining second image data for an arrangement of graph entities of a second portion of graph data;
computing a measure of similarity between the second image data and the first image data; and
determining if a first predetermined condition has been met;

when the first predetermined condition has not been met, repeating the graph entity matching process to compute a similarity measure for a different graph entity arrangement in respect of the second portion of graph data;
identifying as the closest match to the first portion of graph data the graph entity arrangement of the second portion of graph data which, on the basis of the computed similarity measure(s), provides the closest similarity between the first image data and the second image data; and,
when the computed similarity measure of the graph entity arrangement of the second portion of graph data which has been identified as the closest match meets a second predetermined condition, issuing an alert signal.

2.  A computer-implemented method comprising:

carrying out a graph entity matching process between first and second portions of graph data, the process comprising:

obtaining first image data representing the first portion of graph data;
obtaining second image data for an arrangement of graph entities of a second portion of graph data;
computing a measure of similarity between the second image data and the first image data; and
determining if a first predetermined condition has been met;

when the first predetermined condition has not been met, repeating the graph entity matching process to compute a similarity measure for a different graph entity arrangement in respect of the second portion of graph data; and
identifying as the closest match to the first portion of graph data the graph entity arrangement of the second portion of graph data which, on the basis of the computed similarity measure(s), provides the closest similarity between the first image data and the second image data.

3.  A method as claimed in claim 2, wherein, when the computed similarity measure of the graph entity arrangement of the second portion of graph data which has been identified as the closest match meets a second predetermined condition, the method further comprises issuing an alert signal.

4.  A method as claimed in any preceding claim, wherein the first predetermined condition is that the number of times the graph entity matching process has been carried out is equal to a preset maximum number.

5.  A method as claimed in any one of claims 1 to 3, wherein the first predetermined condition is that a similarity measure has been computed for all possible different graph entity arrangements in respect of the second portion of graph data.

6.  A method as claimed in any one of claims 1 to 3, wherein the first predetermined condition is that the computed similarity measure meets or exceeds a first preset similarity threshold.

7.  A method as claimed in claim 1 or in any one of claims 3 to 6, wherein the second predetermined condition is that the computed similarity measure meets or exceeds a second preset similarity threshold.

8.  A method as claimed in claim 7 when read as appended to claim 6, wherein the first preset similarity threshold is equal to the second preset similarity threshold.

9.  A method as claimed in any one of claims 1 to 6, wherein the second predetermined condition is that the computed similarity measure is less than a third preset similarity threshold.

10. A method as claimed in claim 9 when read as appended to claim 6, wherein the first preset similarity threshold is equal to the third preset similarity threshold.

11. A method as claimed in any preceding claim, wherein obtaining second image data comprises extracting information from the graph entity arrangement of the second portion of graph data, and converting the extracted information to a position and pixel value pairing, the second image data being at least one two-dimensional array of pixel values.

**12.** A method as claimed in claim 11, wherein obtaining first image data comprises extracting information from the first portion of graph data, and converting the extracted information to a position and pixel value pairing, the first image data being at least one two-dimensional array of pixel values.

**13.** A method as claimed in claim 12, wherein:

converting the extracted information to a position and pixel value pairing comprises ranking each graph entity in the portion of graph data according to the number of graph entities directly neighbouring that graph entity, and assigning a position to each graph entity in accordance with its ranking;
the method further comprising grouping position and pixel value pairings having adjacent positions into a plurality of regions, such that the first image data and the second image data comprise respective pluralities of two-dimensional arrays of pixel values.

**14.** A method as claimed in claim 13, when read as appended to claim 5, wherein the first predetermined condition comprises two sub-conditions, the first sub-condition being that a similarity measure has been computed for all possible different graph entity arrangements within a given region, and the second sub-condition being that the first sub-condition is met and similarity measures have been computed for all regions.

**15.** A method as claimed in any preceding claim, wherein computing a similarity measure comprises inputting the first and second image data into an artificial neural network, and obtaining a value representing the similarity between feature vectors extracted respectively from the first and second image data by the artificial neural network.

**16.** Apparatus comprising:

a graph entity matcher to carry out a graph entity matching process between first and second portions of graph data, the process comprising:

obtaining first image data representing the first portion of graph data;
obtaining second image data for an arrangement of graph entities of a second portion of graph data;
computing a measure of similarity between the second image data and the first image data; and
determining if a first predetermined condition has been met;

when the first predetermined condition has not been met, the graph entity matcher repeats the graph entity matching process to compute a similarity measure for a different graph entity arrangement in respect of the second portion of graph data; and
a graph matcher to identify as the closest match to the first portion of graph data the graph entity arrangement of the second portion of graph data which, on the basis of the computed similarity measure(s), provides the closest similarity between the first image data and the second image data.

graph entity matching process S100

transformation
process

S101

extraction process

S102

compute similarity
value

S103

graph
matching

S104

Figure 1

**FIGURE 2A**

```
0  1  0  0  1  1
0  0  0  0  0  0
1  1  0  1  0  0
0  0  0  0  1  0
0  0  0  0  0  0
0  0  0  0  0  0
```

**FIGURE 2B**

```
0.000  0.333  0.000  0.000  0.375  0.125
0.000  0.000  0.000  0.000  0.000  0.000
0.500  1.000  0.000  0.250  0.000  0.000
0.000  0.000  0.000  0.000  0.777  0.000
0.000  0.999  0.000  0.000  0.000  0.001
0.000  0.000  0.700  0.005  0.000  0.000
```

**FIGURE 2C**

100

101

Graph to image
transformer

Trained
Model

Feature
extraction

Similarity
computation

Graph
matching

102          103          104

**FIGURE 3**

| PROCESSOR | MEMORY |
|---|---|
| 993 | 994 |

992

| 995 | 996 | 997 |
|---|---|---|
| DISPLAY | INPUT | NETWORK I/F |

**FIGURE 4**

FIGURE 5A

**FIGURE 5B**

| | | Map | | | Reduce |
|---|---|---|---|---|---|
| Permutation | Image generation | CNN forward propagation | Feature vector | Similarity | |
| [ ... ] | | Feature vector | [0.7742838, 1.2325469, ...] | cosin | |
| [ ... ] | | Feature vector | [0.7742838, 1.2325469, ...] | cosin | (max, graph_id) |
| [ ... ] | | Feature vector | [0.7742838, 1.2325469, ...] | cosin | |
| [ ... ] | | Feature vector | [0.7742838, 1.2325469, ...] | cosin | |
| [ ... ] | | Feature vector | [0.7742838, 1.2325469, ...] | cosin | (max, graph_id) |
| [ ... ] | | Feature vector | [0.7742838, 1.2325469, ...] | cosin | |
| [ ... ] | | Feature vector | [0.7742838, 1.2325469, ...] | cosin | |
| [ ... ] | | Feature vector | [0.7742838, 1.2325469, ...] | cosin | (max, graph_id) |

(max, graph_id)

# FIGURE 6

**FIGURE 7**

**FIGURE 8**

Europäisches
Patentamt

European
Patent Office

Office européen
des brevets

# EUROPEAN SEARCH REPORT

Application Number

EP 16 20 3304

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2007/209074 A1 (COFFMAN THAYNE R [US]) 6 September 2007 (2007-09-06) * paragraphs [0004], [0015], [0127], [0134]; figures 1, 5B * | 1-16 | INV. G06K9/68 G06F17/30 G06K9/62 |
| A | US 2015/220809 A1 (KAWABATA HIDEKI [JP] ET AL) 6 August 2015 (2015-08-06) * paragraphs [0006], [0007], [0059], [0066]; figure 3 * | 1-16 | |
| A | WO 2010/068840 A1 (UNIV COLUMBIA [US]; JEBARA TONY [US]; HUANG BERT [US]) 17 June 2010 (2010-06-17) * the whole document * | 1-16 | |

TECHNICAL FIELDS
SEARCHED      (IPC)

G06K
G06F

The present search report has been drawn up for all claims

| Place of search | Date of completion of the search | Examiner |
|---|---|---|
| Berlin | 19 May 2017 | Haffner, Ronald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 20 3304

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2017

| Patent document cited in search report | | | Publication date | Patent family member(s) | | | Publication date |
|---|---|---|---|---|---|---|---|
| US 2007209074 | A1 | | 06-09-2007 | US | 2007209074 | A1 | 06-09-2007 |
| | | | | WO | 2008021585 | A2 | 21-02-2008 |
| US 2015220809 | A1 | | 06-08-2015 | CN | 104982026 | A | 14-10-2015 |
| | | | | EP | 3076366 | A1 | 05-10-2016 |
| | | | | JP | WO2015114833 | A1 | 23-03-2017 |
| | | | | KR | 20150104022 | A | 14-09-2015 |
| | | | | US | 2015220809 | A1 | 06-08-2015 |
| | | | | US | 2015221077 | A1 | 06-08-2015 |
| | | | | WO | 2015114833 | A1 | 06-08-2015 |
| WO 2010068840 | A1 | | 17-06-2010 | CN | 102317962 | A | 11-01-2012 |
| | | | | EP | 2377080 | A1 | 19-10-2011 |
| | | | | US | 2012005238 | A1 | 05-01-2012 |
| | | | | US | 2014122506 | A1 | 01-05-2014 |
| | | | | WO | 2010068840 | A1 | 17-06-2010 |

EPO FORM P0459

For more details about this annex : see Official Journal of the European Patent Office, No. 12/82